# FASCICULE DE BREVET EUROPEEN

(11) **EP 0 430 804 B1**
(45) Date de publication et mention de la délivrance du brevet: **15.02.1995**
(21) Numéro de dépôt: 90403375.0
(22) Date de dépôt: 28.11.1990
(51) Int. Cl.: C10G 35/04, B01J 8/06

(54) **Procédé et dispositif de production d'hydrocarbures à partir d'une charge d'hydrocarbures aliphatiques dans un réacteur chauffé par un lit fluidisé de particules**
Verfahren und Apparat für die Umwandlung von aromatischen Kohlenwasserstoffen aus aliphatischen Kohlenwasserstoffeinsätzen in einem mit fluidisierten Teilchen geheizten Reaktor
Process and apparatus for the production of aromatic hydrocarbons from aliphatic hydrocarbon charge in a reactor heated by a fluidised bed of particles

(30) Priorité: 01.12.1989 FR 8916021; 01.12.1989 FR 8916022
(43) Date de publication de la demande: 05.06.1991
(73) Titulaire: INSTITUT FRANCAIS DU PETROLE, 92506 Rueil-Malmaison Cédex (FR)
(72) Inventeur: Martin, Gérard, F-92500 Rueil Malmaison (FR); Renard, Pierre, F-78860 Saint Nom La Breteche (FR)

(56) Documents cités:
- EP-A- 0 309 219
- FR-A- 2 374 283
- FR-A- 2 531 944
- US-A- 2 886 507
- US-A- 4 244 298

## Description

Cette invention concerne un procédé de production d'hydrocarbures aromatiques à partir d'une charge d'hydrocarbures aliphatiques de 2 à 12 atomes de carbone en présence d'une composition de catalyseur cristallin zéolithique. Elle concerne plus particulièrement la synthèse d'un mélange comprenant en majorité du benzène, du toluène et des xylènes, produits qui sont susceptibles notamment d'améliorer l'indice d'octane des essences. Elle concerne aussi un dispositif de conversion d'hydrocarbures, notamment pour la mise en oeuvre du procédé.

La valorisation des coupes aliphatiques à bas point d'ébullition telles que les LPG justifie l'intéret que l'on peut porter à la mise en oeuvre de procédés de conversion de ces hydrocarbures qui soient performants, sélectifs et économiques tout en contribuant également à la formation d'hydrogène comme sous produit.

La réaction de production d'hydrocarbures aromatiques a été décrite, notamment dans les brevets US 3760 024, US 3756 942 et US 3855 980 en présence d'un catalyseur zéolithique cristallin à base de silice et d'alumine de type MFI comme ZSM5, ZSM12 éventuellement avec un métal comme le gallium dans la charpente ou en présence d'un catalyseur zéolithique contenant un métal hors charpente comme cela est décrit dans les brevets FR 2374 283 et US 4175 057.

Les processus élémentaires mis en jeu dans la transformation des hydrocarbures aliphatiques en hydrocarbures aromatiques sont principalement la déshydrogénation des paraffines, l'oligomérisation des hydrocarbures insaturés obtenus et la cyclisation des oligomères. Globalement, la réaction est fortement endothermique, la vitesse de réaction est sensible aux variations de température et ces réactions successives s'accompagnent d'un dépôt de coke sur le catalyseur et d'une réduction des oxydes métalliques contenus dans le catalyseur, ce qui le désactive très rapidement et réduit la durée de cycle.

Il est connu par le brevet US 4224 298 d'utiliser un lit fluidisé de particules pour chauffer les tubes dans lesquels on réalise le réformage d'hydrocarbures en vue d'obtenir du gaz de synthèse à une température de 750 à 800°C. Dans ce cas la température externe de peau des tubes réactionnels est d'environ 975°C. Le lit fluidisé est chauffé par combustion d'un combustible et d'un comburant directement dans le lit de particules. Ce dispositif présente notamment l'inconvénient de ne pouvoir opérer qu'à des températures élevées, donc de manquer de souplesse pour pouvoir être utilisé dans le cadre de tous les types de réformage. D'autre part, il souffre de tous les inconvénients qui résultent de la combustion en lit fluidisé :
- Il peut tout d'abord y avoir des problèmes de dispersion du combustible au sein du lit, en particulier lorsque le diamètre de ce lit est supérieur à trois mètres par exemple et lorsqu'il est occupé par un grand nombre de tubes. Dans ces conditions, la distribution de la chaleur sur les tubes n'est plus homogène, et il peut y avoir des risques de post-combustion au-delà du lit fluidisé.
- Ensuite, le contrôle du lit qui opère à plus 1000°C, peut s'avérer délicat, en particulier lors des phases transitoires. Dans ce cas, il y a risque de prise en masse de l'ensemble du lit lié à des surchauffes locales dans des zones mal fluidisées. Par exemple, en cas d'arrêt d'urgence du dispositif, si le débit de comburant n'a pas été complètement arrêté, l'oxydation du combustible présent dans le lit peut se poursuivre en lit fixe. Il en résulte une élévation importante de la température du lit par absence d'échange avec les tubes ce qui risque de provoquer la fusion du lit.

Par ailleurs, le brevet FR 2531 944 décrit un procédé de reformage à la vapeur d'une charge hydrocarbonée de manière à obtenir un gaz contenant de l'hydrogène en tant que constituant essentiel. Le chauffage de la zone réactionnelle s'effectue par l'intermédiaire d'un lit fluidisé de particules chauffé à son tour par des brûleurs montés directement sur la paroi du réacteur, de sorte que la combustion se déroule à l'intérieur même du lit fluidisé dans la mesure où la température de ce lit est d'au moins 750°C.

De plus, le brevet FR 2374 283 propose une composition de zéolithe au gallium utilisée dans un procédé de production d'hydrocarbures aromatiques à partir d'une charge d'hydrocarbures aliphatiques.

Un des problèmes à résoudre consiste finalement à assurer une uniformité du chauffage de la zone réactionnelle aux environs de 500 à 600°C permettant d'obtenir un profil de température le plus plat possible dans celle-ci tout en sachant que le catalyseur est sensible à une augmentation de température et qu'il peut être détruit lorsque la température critique est dépassée.

Par ailleurs, un autre problème à résoudre est relatif à la régénération du catalyseur qui doit être rapide, et de fréquence variable suivant la température de la réaction directement dépendante de la charge à traiter. Cette régénération doit être suffisamment douce afin de préserver les performances du catalyseur et minimiser son taux de renouvellement.

L'objet de l'invention est de répondre aux problèmes soulevés ci-dessus, de façon à améliorer les taux de conversion en hydrocarbures aromatiques et la durée de vie du catalyseur.

Plus particulièrement, l'invention concerne un procédé de production d'hydrocarbures aromatiques dans une zone réactionnelle comprenant une pluralité de tubes réactionnels, ledit procédé comprenant une étape a) de mise en contact à l'intérieur des tubes d'une charge d'au moins un hydrocarbure aliphatique de 2 à 12 atomes de carbone et d'une composition de catalyseur zéolithique contenant éventuellement au moins un métal, dans des conditions de réaction telles qu'on récupère un mélange comportant des hydrocarbures aromatiques et qu'on obtient un catalyseur zéolithique usagé avec un minimum de coke déposé au cours de la réaction, les tubes de ladite zone réactionnelle étant chauffés par chauffage indirect dans une enceinte contenant un lit fluidisé de particules mis en mouvement par du gaz de fluidisation, caractérisé en ce que ledit lit fluidisé est essentiellement chauffé par apport de chaleur résultant de l'injection de gaz chauds produits dans une zone extérieure à ladite enceinte, et en ce que les gaz chauds produits extérieurement sont introduits dans ledit lit fluidisé séparément du gaz de fluidisation dans des conditions telles que la température de réaction à l'intérieur des tubes est de 400 à 600°C.

Selon une caractéristique du procédé, la zone réactionelle peut comprendre au moins un tube réactionnel arrangé verticalement ou horizontalement dans l'enceinte contenant le lit fluidisé.

Ce lit fluidisé comprend en général des particules de granulométrie comprise habituellement entre 20 et 5000 micromètres, de préférence comprise entre 50 et 200 micromètres et de masse volumique comprise entre 1000 et 6000 kg/m3, de préférence entre 1500 et 3000 kg/m3. Leur forme peut être quelconque mais avantageusement sphérique.

Le lit comprend en général des particules inertes, par exemple du sable au moins en partie et est chauffé en règle générale à une température sensiblement supérieure à la température de la réaction dans la zone tubulaire réactionnelle, par exemple de 480° à 600°C, dans des conditions de chauffage telles que l'écart de température entre le lit fluidisé chauffant et le catalyseur est habituellement entre 5 et 100°C et avantageusement entre 20 et 40°C.

Selon une autre caractéristique de l'invention, le lit de particules est habituellement fluidisé au moyen d'un gaz de fluidisation injecté par exemple par des tubes munis d'orifices connus de l'homme de l'art, situés à la base de l'enceinte de préférence cylindrique. Les débits de gaz de fluidisation sont tels que la vitesse superficielle est comprise entre 0,01 et 1,00 m/s et de préférence entre 0,1 et 0,3 m/s. Dans ces conditions, la quasi isothermicité du lit est assurée et en raison des bons coefficients de transfert de chaleur entre le lit et la paroi interne du tube, la durée de vie du catalyseur est augmentée et la sélectivité de la réaction amélioré.

Ces gaz de fluidisation peuvent être des fumées de récupération d'un four ou d'une chaudière, de l'air préchauffé ou encore des effluents de turbines.

Selon une caractéristique du procédé, l'étape de régénération du catalyseur peut être effectuée dans le même tube réactionnel disposé dans l'enceinte contenant le lit fluidisé, où s'est déroulée l'étape de réaction.

Une partie au moins de la chaleur dégagée lors de cette régénération par la réaction de combustion est alors échangée avec le lit fluidisé. La réaction de régénération du catalyseur qui est exothermique contribue alors de manière significative au bilan thermique du procédé puisqu'elle compense au moins en partie la perte de chaleur due à l'endothermicité de la réaction d'aromatisation. En fait, le lit fluidisé agit en tant que volant thermique en retirant des tubes réactionnels, la chaleur de régénération du catalyseur.

Toute combinaison d'apport de calories au lit fluidisé peut être envisagée. C'est ainsi que l'apport de chaleur due a la régénération du catalyseur et au moins une injection de gaz selon invention chauffés à une température comprise entre 1200° et 2200°C par des brûleurs à fuel gaz par exemple et introduits directement dans le lit fluidisé, de préférence au niveau de la paroi latérale ont permis d'obtenir d'excellents résultats.

Selon un mode de réalisation préféré du procédé selon l'invention, la zone réactionnelle peut comprendre une pluralité de tubes réactionnels disposés en parallèle et groupés en faisceaux, ceux-ci pouvant être alimentés en parallèle. Une partie de ceux-ci au moins est adaptée à réaliser l'aromatisation de la charge pendant que l'autre partie est adaptée à réaliser l'étape de régénération du catalyseur. La régénération étant sensiblement terminée les tubes fonctionnant auparavant en régénération fonctionnent alors en réacteur d'aromatisation. Ce fonctionnement en alternance par le jeu de vannes, s'avère très souple.

Le catalyseur peut être en lit mobile ou en lit fixe, de préférence en lit fixe. Dans ces conditions en lit fixe, on réduit les phénomènes d'usure mécanique due principalement à la circulation du catalyseur, qui conduisent à la formation de fines en quantité importante, à des perturbations du fonctionnement de l'unité, à l'entrainement de ces fines par les produits de la réaction avec comme conséquence des dégradations des unités de traitement aval des produits, et à une augmentation de la consommation en catalyseur.

Les avantages du procédé selon l'invention sont les suivants:
Grâce à son homogénéité de température et aux excellents coefficients d'échange thermique qui le caractérisent, le lit fluidisé assure une température sensiblement constante sur toute la longueur du tube ainsi que sur tous les tubes constituant la zone réactionnelle, même si les faisceaux comportent plusieurs centaines, voire plusieurs milliers de tubes. Le profil radial de température se trouve alors être sensiblement plat. Grâce à cette uniformité de température sur l'ensemble du volume de catalyseur, il en résulte une meilleure utilisation de celui-ci.

L'homogénéité de température du lit est également un avantage lors de la régénération du catalyseur dans l'enceinte. Elle permet de démarrer facilement l'oxydation du coke et de mener cette régénération plus rapidement que dans les autres mises en oeuvre, puisque les calories libérées par l'oxydation ménagée sont rapidement transférées vers le lit.

L'écart de température entre le milieu chauffant et le catalyseur étant préférentiellement compris entre environ 20 et 40°C, le catalyseur se retrouvera à la température du lit en cas de bouchage partiel ou total d'un des tubes par un dépôt de coke excessif, par exemple et donc dans des conditions qui n'entraînent pas sa destruction.

Lorsque plusieurs faisceaux de tubes sont immergés dans un même lit fluidisé une partie de l'apport calorifique peut provenir de la régénération lorsque les faisceaux fonctionnent en alternance, le procédé devenant alors plus économique en énergie.

La technologie ainsi décrite permet aussi de réduire le temps de passage entre le cycle de réaction et le cycle de régénération puisque la température du lit est la même dans les deux cas.

Pour une capacité donnée, l'encombrement du faisceau est beaucoup plus réduit que celui requis par les fours radiants par exemple. Cette plus grande compacité amène évidemment un abaissement des investissements.

Cette technologie, de conception très souple grâce à l'aspect modulaire de sa mise en oeuvre, peut être adaptée aussi bien aux petites qu'aux grandes capacités. Elle peut aussi être conçue aussi bien avec une régénération cyclique du catalyseur qu'avec une régénération en continu.

Généralement les particules inertes utilisées comme lit fluidisé sont choisies parmi des matériaux réfractaires comme les oxydes d'aluminium, les oxydes de silicium (sable), les carbonates naturels de magnésium ou de calcium ou leur mélange. De préférence, on utilise le sable en raison de sa disponibilité et de son faible prix.

La réaction s'effectue en général en atmosphère inerte à une pression comprise entre 0,2 et 10 bars et à une température de 400 à 600°C en fonction de la nature de la charge, la température étant avantageusement de 480 à 550°C pour la coupe LPG et de 450 à 530°C pour la coupe naphta, et sous une pression préférée 1 à 5 bars absolus. De préférence cette température est de 500 à 530°C pour la coupe LPG et de 480 à 510°C pour la coupe naphta.

Le catalyseur utilisé est généralement une zéolithe cristalline de type MFI comme les zéolithes ZSM, par exemple ZSM5, ZSM8, ZSM11, ZSM12 et ZSM35 décrites dans le brevet US3970 544.

Ces zéolithes pourront contenir avantageusement au moins un métal.

A titre d'exemple, on peut citer le zinc, le gallium, de préférence le gallium.

Ces métaux peuvent être dans la charpente ou hors charpente.

On peut également utiliser des zéolithes synthétisées en milieu fluorure avec ou sans métal.

Le catalyseur est utilisé de préférence sous forme de lit fixe, ce qui diminue les phénomènes d'attrition.

Les vitesses spatiales préconisées sont habituellement de 0,5 à 5h⁻¹ et préférentiellement de 1,5 à 2,5h⁻¹.

La charge d'hydrocarbures aliphatiques comprend généralement de 2 à 12 atomes de carbone, elle contient avantageusement du LPG ou du naphta, les conditions opératoires pouvant être différentes suivant la nature de la charge. Par exemple, avec une charge comme le LPG, on pourra opérer à une température supérieure à la température à laquelle on opèrerait avec une charge comme le naphta. L'unité permet ainsi de manière très rapide et par un contrôle aisé de la température du lit fluidisé, d'accepter des charges de composition variable.

De manière générale, les conditions opératoires sont optimisées de façon à convertir au moins 60% de la charge, particulièrement avec le LPG et avantageusement au moins 80% avec un taux d'hydrocarbures aromatiques d'au moins 65% par rapport à la charge initiale.

En conséquence, on peut recycler après séparation des effluents, la partie de la charge non convertie.

Des taux de conversion plus importants peuvent être obtenus, avec des charges plus lourdes, par exemple au moins 95%.

La régénération est généralement effectuée après une étape de purge en présence d'un gaz contenant de l'oxygène selon une technique connue (par exemple un mélange N2 + O2). On opère habituellement à une température comprise entre 450 et 650°C et de préférence entre 480 et 560°C.

Le dispositif, notamment pour la mise en oeuvre du procédé, peut être le suivant:
Il comprend une enceinte revêtue d'un matériau isolant avec une face supérieure, une face inférieure et une enveloppe latérale et il contient un réacteur rempli d'un catalyseur approprié, ledit réacteur étant au moins en partie immergé dans un lit fluidisé de particules chaudes et de préférence inertes, le lit échangeant de la chaleur avec ledit réacteur, des moyens de fluidisation du lit reliés à la face inférieure de ladite enceinte. Le réacteur comprend en outre une pluralité de tubes réactionnels sensiblement parallèles entre eux et alimentés en parallèle, des moyens d'alimentation en charge reliés à une extremité desdits tubes et des moyens de récupération de l'effluent contenant des hydrocarbures aromatiques connectés à l'autre extrémité de ces tubes, et ladite enceinte est chauffée essentiellement par au moins un moyen d'alimentation en gaz chaud, tel qu'un générateur de gaz chaud, externe à ladite enceinte. Celui-ci est relié avantageusement à ladite enveloppe ou monté avantageusement sur ladite enveloppe.

Selon une caractéristique du dispositif, l'enceinte peut être cylindrique et la pluralité de tubes constitue un volume de forme globalement cylindrique ou globalement polygonale.

Selon une autre caractéristique, le moyen d'alimentation en gaz chaud présente une entrée de sa ligne de transfert dans l'enveloppe latérale, dont la distance à la face supérieure de l'enceinte est comprise généralement entre le quart et la moitié de la hauteur de l'enveloppe latérale, ce qui favorise l'homogénéité de la température dans le lit.

Selon une autre caractéristique, le moyen d'alimentation en gaz chaud, un foyer par exemple contenant au moins un brûleur peut être directement en contact avec la paroi de l'enceinte et les gaz chauds de la combustion sont introduits dans le lit au moyen d'un orifice percé dans la paroi.

Selon une autre caractéristique, des moyens de fluidisation complémentaires connectés à la face inférieure de l'enceinte peuvent être rajoutés de façon à fluidiser le volume du lit fluidisé de particules situé entre l'enveloppe latérale de l'enceinte et l'enveloppe fictive déterminée par la pluralité de tubes réactionnels avec une vitesse de fluidisation plus importante que celle délivrée par les moyens de fluidisation du lit au niveau des tubes réactionnels. Cet agencement favorise la circulation des particules de la couronne périphérique vers le centre et donc une meilleure distribution de la chaleur et un meilleur échange thermique.

Selon une autre caractéristique, le dispositif comprend habituellement des moyens de régénération adaptés à régénérer le catalyseur usagé dans les mêmes tubes et dans la même enceinte réactionnelle où s'est déroulée la réaction de production d'aromatiques. Ces moyens de régénération comportent en général une alimentation en gaz de régénération à une extrémité du faisceau de tubes et une évacuation de l'effluent de régénération à l'autre extrémité.

Le dispositif peut comporter également des moyens adaptés à relier les tubes réactionnels alternativement aux moyens de régénération puis aux moyens nécessaires à la réalisation de la réaction, en particulier à relier une extrémité des tubes aux moyens d'alimentation en charge et l'autre extremité aux moyens d'évacuation de l'effluent produit.

Le procédé peut être mis en oeuvre selon une autre variante du dispositif selon l'invention, décrite ci-dessous:
Le dispositif comprend une pluralité de tubes réactionnels et une pluralité de tubes de régénération immergés dans le lit fluidisé et adaptés à régénérer le catalyseur usagé. Ces tubes de régénération sont reliés à une extrémité à une alimentation en gaz de régénération et à l'autre extrémité à une évacuation d'un effluent de régénération. Le dispositif comprend en outre des moyens adaptés à relier les tubes réactionnels alternativement aux moyens d'alimentation en charge par leur première extrémité et aux moyens de récupération de l'effluent par leur seconde extrémité, puis à l'alimentation en gaz de régénération par leur première extrémité et à l'évacuation de l'effluent de régénération par leur seconde extrémité. De plus, ces mêmes moyens sont adaptés à relier les tubes de régénération alternativement à l'alimentation en gaz de régénération par leur première extrémité et à l'évacuation de l'effluent de régénération par leur seconde extrémité puis aux moyens d'alimentation en charge par leur première extrémité et aux moyens de récupération de l'effluent d'hydrocarbures aromatiques par leur seconde extrémité. Ces tubes réactionnels opèrent en phase dite réactionnelle (production d'aromatiques) pendant que les tubes de régénération opèrent en phase dite de régénération, dans un premier temps et les tubes réactionnels deviennent ensuite des tubes de régénération tandis que le tubes de régénération deviennent des tubes réactionnels, dans un deuxième temps.

L'invention sera mieux comprise au vu des figures ci-dessous illustrant de manière schématique le procédé et le dispositif selon l'invention, parmi lesquelles:
- La figure 1 montre le dispositif en coupe longitudinale,
- La figure 2 représente une coupe transversale d'une zone réactionnelle et régénérative dans une même enceinte d'un lit fluidisé,
- La figure 3 illustre un exemple d'assemblage modulaire où les réacteurs tubulaires ainsi que les régénérateurs tubulaires sont disposés dans une même enceinte.

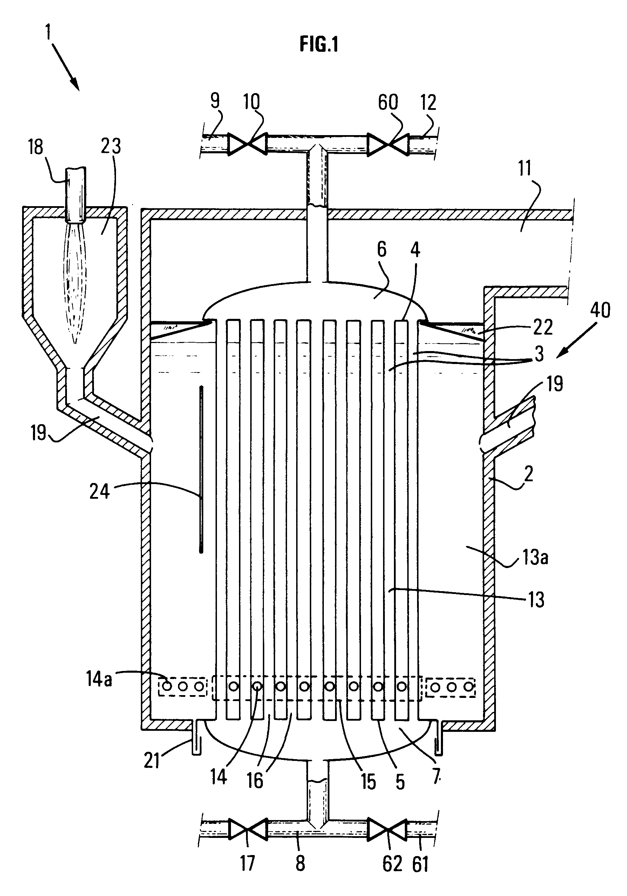

Selon la figure 1, une enceinte réactionnelle 1 de forme cylindrique ayant une paroi 2 revêtue d'un matériau isolant) comprend un réacteur étanche 40 immergé dans un lit fluidisé de sable 13. Ce réacteur comporte une pluralité de tubes 3 en acier inox (100 par exemple), cylindriques ou de forme globalement cylindrique disposés verticalement et maintenus par des éléments de support 22. Leur diamètre interne est compris entre 10 et 200 mm, de préférence entre 50 et 100 mm et leur longueur est de 2 à 20 m, de préférence de 3 à 10 mètres.

Les tubes peuvent être munis intérieurement d'ailettes transversales afin d'accroître le transfert de chaleur au catalyseur. Ces tubes sont généralement parallèles à l'axe de l'enceinte et sont regroupés en faisceaux de forme cylindrique avec une distance entre axe compris entre 1,5 et 6 fois le diamètre externe du tube et de préférence entre 2 et 3 fois le diamètre externe. A leurs extrémités, les tubes sont reliés par l'intermédiaire de plaques tubulaires supérieures et inférieures 4 et 5 à une chambre 6 alimentant les tubes en une charge introduite par la ligne 9 contrôlée par une vanne 10 et à une chambre 7 récupérant l'effluent de la réaction évacué par la ligne 8 contrôlée par une vanne 17. Ces réacteurs tubulaires contiennent un lit fixe de catalyseur zéolithique, par exemple ZSM5 pouvant contenir du gallium dans la charpente et en dehors de la charpente. Ce catalyseur est introduit dans les tubes suivant des méthodes connues de l'Homme de l'art.

La charge, par exemple un LPG, est introduite par la ligne 9 à la partie supérieure du réacteur 40. Elle a été préchauffée par exemple par les fumées du réacteur dans une zone de convection située en aval de la sortie 11 de l'enceinte 1.

Le volume occupé par les tubes représente de 10 à 35 % du volume total du lit fluidisé en expansion.

Le lit fluidisé est constitué par des particules de sable d'environ 0,1 mm par exemple. Le gaz de fluidisation est introduit à la base de l'enceinte 1 par des tubes de fluidisation 14 disposés de manière adequate et de manière sensiblement horizontale sur toute la base du réacteur et de l'enceinte 1, sensiblement au niveau de l'extrémité inférieure des tubes 3 par laquelle s'effectue l'évacuation des effluents de la réaction. Ces tubes de fluidisation percés d'orifices dirigeant le flux de gaz de fluidisation vers le bas du réacteur se présentent sous la forme d'un peigne facilement amovible que l'on glisse entre les tubes 3 contenant le catalyseur. Les tubes de fluidisation sont reliés à un collecteur 15. Le nombre et la forme des orifices sont tels qu'il n'y ait pas de zones défluidisées où le transfert de chaleur entre tubes et lit ne pourrait plus être assuré.

Les effluents du réacteur traversent les diffuseurs 16 situés à la base des tubes 3 avant de sortir du réacteur par la ligne 8 et une vanne de contrôle 17 qui les dirigent vers une unité de séparation, non représentée sur la figure.

La partie périphérique 13a du réacteur non occupée par les tubes réactionnels représente en général entre 5 et 40% du volume total du lit.

Cette couronne du lit directement en contact avec les gaz de chauffage décrits ci-dessous est animée d'une vitesse de fluidisation supérieure, ce qui permet d'équilibrer plus rapidement la température du lit, en raison d'une circulation intense des particules induite par des différences de densité apparente du milieu entre le centre et la périphérie.

Cette circulation de particules de la périphérie vers le centre de l'enceinte 1 peut être accentuée à volonté par des moyens de fluidisation 14a déconnectés des moyens 14 et disposés à sa base, qui permettent de fluidiser les particules à une vitesse plus importante à la périphérie qu'au centre.

Le chauffage du lit fluidisé est essentiellement réalisé par des injections de gaz chauds à une température comprise entre 1200 et 2200°C résultant de la combustion totale d'un carburant et d'un comburant et provenant de brûleurs 18 à fuel gaz par exemple disposés dans au moins un foyer 23 revêtu intérieurement de matériaux réfractaires. Ceux-ci sont situés hors de l'enceinte 1, de préférence reliés à l'enveloppe latérale cylindrique, et sont disposés de telle façon que le flux de gaz chauds résultant de la combustion totale soit introduit par une ligne de transfert 19 à contre courant des gaz de fluidisation en un point situé entre la moitié et le tiers supérieur de la hauteur du lit fluidisé. Cette ligne de transfert est habituellement inclinée vers le bas du réacteur de façon à éviter l'accumulation de particules. On ne sortirait pas du cadre de l'invention avec une ligne de transfert ou un orifice débouchant en un autre point de l'enceinte.

Un dispositif de protection 24 évite le contact direct des gaz chauds avec les tubes.

On parvient ainsi à un meilleur contact chaleur-particules et à maintenir le lit fluidisé à une température déterminée en fonction du type de charge, qui est sensiblement la même dans tout le volume de la zone réactionnelle, par exemple voisine de 520°C avec un écart de température entre le lit de sable et le catalyseur d'environ 20°C.

Les fumées constituées par le mélange de gaz de fluidisation et de chauffage sont récupérées dans la partie supérieure du réacteur et évacuées par la ligne 11 en vue de récupérer la chaleur disponible. Bien évidemment, elles ne sont jamais en contact avec la charge. De même, la charge ou les effluents ne sont jamais en contact avec le lit fluidisé.

Un dispositif 21 à la base du réacteur est un joint de sable qui permet l'expansion du faisceau tubulaire vers le bas lors de la dilatation des tubes.

Lorsque le catalyseur est désactivé, on réalise l'étape de régénération de celui-ci directement dans les tubes où s'est déroulée la réaction, et dans la même enceinte sans modifier les conditions de fonctionnement du lit fluidisé. A cette fin, on stoppe l'alimentation de la charge par la vanne 10 et on alimente les tubes en gaz de régénération introduit par la ligne 12 munie d'une vanne 60. La température du lit fluidisé étant à un niveau approprié, la régénération commence instantanément. Les gaz effluents de régénération sont évacués par la ligne 61 contrôlée par la vanne 62.

On peut éventuellement moduler l'intensité de chauffage du brûleur dans le foyer, voire éventuellement stopper l'arrivée des gaz chauds.

Avant chaque passage de la phase réaction à la phase régénération et de la phase régénération à la phase réaction, on fait circuler en général un courant de gaz inerte pour purger le dispositif.

L'appareil fonctionne ainsi en discontinu, tantôt en phase de réaction, tantôt en phase de régénération avec des durées de phase pouvant être différentes ou égales.

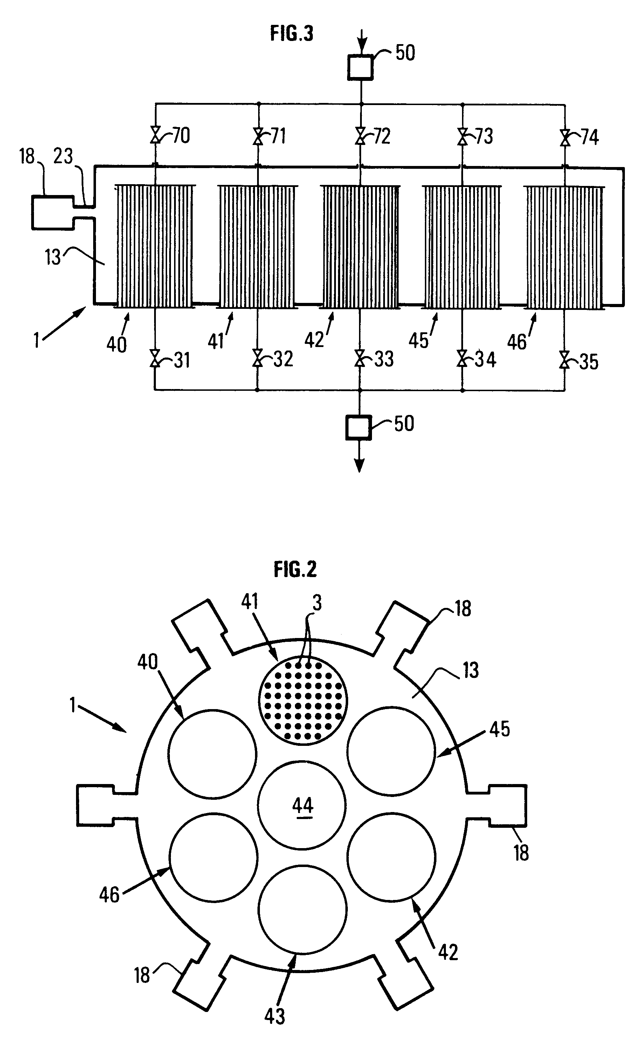

Selon la Figure 2 illustrant un exemple de réaction et de régénération du catalyseur dans un même lit fluidisé, l'enceinte 1 contient le lit fluidisé de sable 13 chauffé par les moyens de chauffage 18 décrits ci-dessus.

Cette enceinte contient une pluralité de tubes verticaux comme ceux décrits ci-dessus selon la Figure 1, alimentés en parallèle. Ces tubes sont adaptés à être alternativement, par des moyens d'alimentation appropriés, des réacteurs de production d'aromatiques 40, 41, 42, 43, 44 selon le procédé et des régénérateurs 45 et 46 de catalyseur usagé après la réaction.

On montre sur la Figure 3 des réacteurs 40, 41, 42 et des régénérateurs45 et 46. Un jeu de vannes 70, 71, 72 ouvertes permet d'alimenter en parallèle les réacteurs avec la charge, tandis qu'un autre jeu de vannes fermées 73 et 74 interdit la circulation de la charge dans les régénérateurs 45 et 46, mais permet l'alimentation en un gaz de régénération tel que de l'azote et de l'air. La fonction des vannes d'évacuation 31, 32, 33, 34 et 35 des deux types d'effluents est identique à celle des vannes précédentes.

La chaleur dégagée par la combustion du catalyseur usagé dans les tubes fonctionnant en régénération fournit une partie de l'énergie consommée par la réaction. L'ensemble de ces vannes des alimentations et des évacuations sont commandés par des moyens de contrôle 50 qui permettent aux faisceaux de tubes 40, 41 et 42 d'être alternativement des réacteurs de production d'hydrocarbures aromatiques puis des régénérateurs et aux faisceaux 43 et 44 des régénérateurs puis des réacteurs de production d'aromatiques après une période de purge.

Ces régénérateurs deviennent après la période de régénération, des réacteurs, tandis que d'autres réacteurs deviennent des régénérateurs.

On a représenté de manière illustrative cinq faisceaux de tubes fonctionnant en réacteur et deux fonctionnant en régénérateur. Toute autre combinaison est évidemment réalisable et reste dans le cadre de l'invention.

## Revendications

1. Procédé de production d'hydrocarbures aromatiques dans une zone réactionnelle comprenant une pluralité de tubes réactionnels, ledit procédé comprenant une étape a) de mise en contact à l'intérieur des tubes d'une charge d'au moins un hydrocarbure aliphatique de 2 à 12 atomes de carbone et d'une composition de catalyseur zéolithique contenant éventuellement au moins un métal, dans des conditions de réaction telles qu'on récupère un mélange comportant des hydrocarbures aromatiques et qu'on obtient un catalyseur zéolithique usagé avec un minimum de coke déposé au cours de la réaction, les tubes de ladite zone réactionnelle étant chauffés par chauffe indirect dans une enceinte contenant un lit fluidisé de particules mis en mouvement par du gaz de fluidisation, caractérisé en ce que ledit lit fluidisé est essentiellement chauffé par apport de chaleur résultant de l'injection de gaz chauds produits dans une zone extérieure à ladite enceinte, et en ce que les gaz chauds produits extérieurement sont introduits dans ledit lit fluidisé séparément du gaz de fluidisation dans des conditions telles que la température de réaction à l'intérieur des tubes est de 400 à 600°C.

2. Procédé selon la revendication 1 dans lequel la température de la reaction est de 480°C à 550°C pour une coupe LPG.

3. Procédé selon la revendication 1 dans lequel la température de la réaction est de 450°C à 530°C pour une coupe naphta.

4. Procédé selon l'une des revendications 1 à 3 dans lequel le lit de particules est chauffé au moins en partie par au moins une injection dans le lit, de gaz chauds provenant d'au moins un générateur de gaz chaud tel qu'un foyer équipé d'au moins un brûleur.

5. Procédé selon l'une des revendications 1 à 4, dans lequel on réalise une étape de régénération b) du catalyseur dans la même zone réactionnelle que celle de l'étape a), dans des conditions de régénération, le lit de particules étant chauffé au moins en partie par la chaleur générée par lit régénération du catalyseur.

6. Procédé selon l'une des revendications 1 à 5, dans lequel le lit fluidisé échange de la chaleur avec lesdits tubes réactionnels dans des conditions telles que l'écart de température entre le lit fluidisé et le catalyseur est de 5 à 100°C et avantageusement de 20 à 40°C.

7. Procédé selon l'une des revendications 1 à 6 dans lequel, après avoir récupéré le mélange d'hydrocarbures, on réalise la séquence suivante :
on stoppe l'étape a) de mise en contact de la charge avec le catalyseur, on purge la zone réactionnelle , on réalise une étape de régénération b) du catalyseur dans la même zone réactionnelle que celle de l'étape a), on évacue un effluent de régénération, on purge la zone réactionnelle et on répète l'étape a) et les étapes de la séquence ci-dessus.

8. Procédé selon l'une des revendications 1 à 7 dans lequel la zone réactionnelle comprend une pluralité de tubes disposés en parallèle, une partie au moins étant adaptée à réaliser l'étape a) pendant que l'autre partie est adaptée à réaliser l'étape b) et vice-versa.

9. Procédé selon l'une des revendications 1 à 8 dans lequel le catalyseur est sous forme d'un lit fixe.

10. Procédé selon l'une des revendications 1 à 9 dans lequel on introduit l'apport de chaleur extérieur par une ligne de transfert reliée à un point situé entre le quart supérieur et la moitié de la hauteur de l'enceinte.

11. Procédé selon l'une des revendications 1 à 10 dans lequel le lit fluidisé comprend une zone en contact direct avec la zone réactionnelle et une zone périphérique à cette zone réactionnelle et dans lequel on fluidise la zone du lit à la périphérie de la zone réactionnelle à une vitesse supérieure à celle de la zone du lit en contact direct avec la zone réactionnelle.

12. Dispositif de conversion d'hydrocarbures comprenant une enceinte (1) avec une face supérieure, une face inférieure et une enveloppe latérale (2) et contenant un réacteur étanche (40) rempli d'un catalyseur approprié, ledit réacteur étant au moins en partie immergé dans un lit (13) fluidisé de particules chaudes de préférence inertes, le lit échangeant de la chaleur avec ledit réacteur, des moyens de fluidisation (14) du lit reliés à la face inférieure de ladite enceinte, le réacteur comprenant en outre une pluralité de tubes réactionnels (3) sensiblement parallèles entre eux et alimentés en parallèle, des moyens d'alimentation (9) en une charge reliés à une extrêmité desdits tubes et des moyens de récupération (8) d'un effluent connectés à l'autre desdits tubes (3), le lit fluidisé étant chauffé essentiellement par au moins un moyen d'alimentation en gaz chaud (18,23), tel qu'un générateur de gaz chaud, externe à l'enceinte.

13. Dispositif selon la revendication 12, dans lequel le moyen d'alimentation en gaz chaud est relié à l'enveloppe latérale ou est monté sur ladite enveloppe.

14. Dispositif selon la revendication 12 ou 13, dans lequel la longueur des tubes est de 2 à 20 m, leur diamètre interne est de 10 à 200 mm, les tubes étant regroupés en au moins un faisceau, la distance entre axe de chaque tube étant comprise entre 1,5 et 6 fois son diamètre externe.

15. Dispositif selon l'une des revendications 12 à 14, dans lequel le moyen (18, 23) d'alimentation en gaz chaud comporte une ligne de transfert (19) adaptée à diriger le flux de gaz chaud à contre-courant du flux de gaz de fluidisation.

16. Dispositif selon l'une des revendications 12 à 15 dans lequel l'enceinte est cylindrique et la pluralité des tubes constitue une enveloppe de forme globalement cylindrique ou globalement polygonale.

17. Dispositif selon l'une des revendications 12 à 16 dans lequel le moyen d'alimentation en gaz chaud débouche en un point situé à une distance de la face supérieure de l'enceinte comprise entre le quart et la moitié de la hauteur de l'enveloppe latérale.

18. Dispositif selon l'une des revendications 12 à 17, dans lequel le volume du lit fluidisé situé entre l'enveloppe latérale de l'enceinte et l'enveloppe déterminée par la pluralité des tubes est fluidisé par des moyens de fluidisation complémentaires (14a) reliés à la face inférieure de l'enceinte (1) et adaptés à délivrer une vitesse des gaz de fluidisation plus importante que celle délivrée par les moyens de fluidisation (14) du lit au niveau des tubes.

19. Dispositif selon l'une des revendications 12 à 18 caractérisé en ce qu'il comprend des moyens de régénération (12, 61) du catalyseur usagé adaptés à regénérer le catalyseur dans lesdits tubes et qui sont reliés aux tubes réactionnels et des moyens (50) adaptés à relier les tubes réactionnels alternativement aux moyens d'alimentation (9) en charge et aux moyens de récupération (8) de l'effluent puis auxdits moyens de régénération (12,61).

20. Dispositif selon l'une des revendications 12 à 19 comprenant une pluralité de tubes réactionnels (40, 41, 42) et une pluralité de tubes de régénération (45, 46) immergés dans le lit fluidisé et adaptés à régénérer le catalyseur, ces tubes de régénération étant reliés à une extrémité à une alimentation en gaz de régénération (12) et à l'autre extrémité à une évacuation (61) d'un effluent de régénération et comprenant en outre des moyens (50) adaptés à relier les tubes réactionnels alternativement aux moyens d'alimentation (9) en charge et aux moyens de récupération (8) de l'effluent, puis à l'alimentation en gaz de régénération (12) et à l'évacuation de l'effluent de régénération (61), ces moyens (50) étant adaptés à relier en outre les tubes de régénération alternativement à l'alimentation en gaz de régénération (12) et à l'évacuation de l'effluent de régénération (61), puis aux moyens d'alimentation en charge (9) et aux moyens de récupération (8) de l'effluent d'hydrocarbures aromatiques, les tubes réactionnels opérant en phase dite réactionnelle pendant que les tubes de régénération opèrent en phase dite de régénération dans un premier temps et les tubes réactionnels devenant ensuite des tubes de régénération tandis que les tubes de régénération deviennent des tubes réactionnels dans un deuxième temps.

21. Utilisation du dispositif selon l'une des revendications 12 à 20 dans un procédé de production d'hydrocarbures aromatiques à partir d'une charge d'au moins un hydrocarbure aliphatique de 2 à 12 atomes de carbone.

## Claims

1. Process for the production of aromatic hydrocarbons in a reaction zone incorporating a plurality of reaction tubes, said process comprising a stage a) of contacting inside said reaction tubes a charge of at least one aliphatic hydrocarbon with 2 to 12 carbon atoms and a zeolitic catalyst composition optionally containing at least one metal, under reaction conditions such that a mixture is recovered containing aromatic hydrocarbons and a spent zeolitic catalyst with a minimum of coke deposited during the reaction, said reaction tubes being heated by indirect heat exchange in an enclosure containing a fluidised particle bed fluidised by fluidisation gas, characterised in that heating said fluidised bed at least partly by a heat supply resulting from the injection of hot gases produced in an area outside said enclosure, and introducing the externally produced hot gases into the fluidised bed separately from said fluidisation gas under conditions so as to provide a reaction temperature inside said reaction tubes of 400° to 600°C.

2. A process according to claim 1, wherein the reaction temperature is 480° to 550°C for an liquefied petroleum gas (LPG) fraction.

3. A process according to claim 1, wherein the reaction temperature is 450° to 530°C for a naphtha fraction.

4. A process according to one of claims 1 to 3, wherein the particle bed is at least partly heated by at least one injection into the bed of hot gases from at least one furnace equipped with at least one burner.

5. A process according to one of claims 1 to 4, wherein a catalyst regeneration stage b) is carried out in the same reaction zone as that of stage a) under regeneration conditions, the particle bed being at least partly heated by the heat generated by the regeneration of the catalyst.

6. A process according to one of claims 1 to 5, wherein the fluidised bed exchanges heat with said reaction tubes under conditions such that the temperature difference between the fluidised bed and the catalyst is 5° to 100°C and advantageously 20 to 40°C.

7. A process according to one of claims 1 to 6, further comprising following the recovery of the hydrocarbon mixture, the following procedure : stage a) stopping the contacting of the charge with the catalyst, purging the reaction zone ; (b) regenerating the catalyst in the same reaction zone as that of stage a) ; discharging a regeneration effluent, purging the reaction zone, and repeating stage a) and the stages of the above procedure.

8. A process according to one of claims 1 to 7, wherein the reaction zone comprises a plurality of tubes disposed in parallel relationship, one part at least being adapted for carrying out stage a), whilst the other part is adapted to carry out stage b) and vice versa.

9. A process according to one of claims 1 to 8 wherein the catalyst is the form of a fixed bed.

10. A process according to one of claims 1 to 9, wherein the external heat support means is introduced by a transfer line connected to a point located between the upper one quarter and half the height of the enclosure.

11. A process according to one of claims 1 to 10, wherein the fluidised bed consists of a zone in direct contact with the reaction zone and a peripheral zone to this reaction zone and wherein the zone of the bed at the periphery of the reaction zone is fluidised at a higher speed than that of the zone of the bed which is in direct contact with the reaction zone.

12. Apparatus for converting hydrocarbons comprising an enclosure (1) with an upper face, a lower face and a lateral casing (2) and a tight reactor (40) filled with an appropriate catalyst, said reactor being at least partly immersed in a fluidised bed of hot and preferably inerts particles, the bed exchanging heat with said reactor, and with bed fluidisation means being connected to the lower face of said enclosure, the reactor also comprising a plurality of substantially mutually parallel and parallel-supplied reaction tubes (3), charge supply means connected to one end of said tubes, and recovery means of an effluent connected to the other end of said tubes, the fluidised bed being essentially heated by at least a hot gas supply means, such as a hot gas generator located outside the enclosure.

13. Apparatus according to claim 12, wherein the hot gas supply means is connected to the lateral casing or is mounted on said casing.

14. Apparatus according to claim 12 or 13, wherein the tube length is 2 to 20 m, their internal diameter is 10 to 200 mm, the tubes being arranged in at least one bundle, the distance between the axe of each tube being comprised between 1,5 and 6 times its external diameter.

15. Apparatus according to one of claims 12 to 14, wherein the hot gas supply means comprises a transfer line adapted to direct the hot gas stream in countercurrent with respect to the fluidisation gas stream.

16. Apparatus according to one of claims 12 to 15, wherein the enclosure is cylindrical and the plurality of tubes constitute a overall cylindrical or overall polygonal casing.

17. Apparatus according to one of claims 12 to 16, wherein the hot gas supply mans has an inlet at a point located at a distance of the upper face of the enclosure comprised between the quarter and half of the height of the lateral casing.

18. Apparatus according to one of claims 12 to 17, wherein the volume of the fluidised bed located between the lateral casing of the enclosure and the envelope determined by the plurality of the tubes is fluidised by complementary fluidisation means (14a) connected to the lower face of the enclosure (1) and adapted to supply a fluidisation gas rate greater than that supplied by the bed fluidisation means (14) at the level of the tubes.

19. Apparatus according to one of claims 12 to 18 characterized in that it comprises regeneration means (12, 61) of the spent catalyst adapted to regenerate the catalyst in said tubes, and which are connected to the reaction tubes and means (50) for connecting the reaction tubes alternately to the charge supply means (9) and to the effluent discharge means, then to said regeneration means (12, 61)

20. Apparatus according to one of claims 12 to 19 comprising a plurality of reaction tubes (40, 41, 42) and a plurality of regeneration tubes immersed in the fluidised bed and adapted to regenerate the catalyst, said regeneration tubes being connected at one end to a regeneration gas supply (12) and at the other end to a regeneration effluent discharge (61) and further comprising means (50) for connecting the reaction tubes alternately to the charge supply means and to the effluent recovering means (8) and then to the regeneration gas supply (12) and to the regeneration effluent discharge (61), said means (50) being adapted to further connect the regeneration tubes alternately to the regeneration gas supply (12) and to the regeneration effluent discharge (61), then to the charge supply means (9) and to the aromatic hydrocarbons effluent recovering means (8), the reaction tubes operating in the so-called reaction phase whilst the regeneration tubes operate in the so-called regeneration phase during a first stage and then the reaction tube becoming regeneration tubes whilst the regeneration tubes become reaction tubes during a second stage.

21. Use of the apparatus according to one of claims 12 to 20 in a process for producing aromatic hydrocarbons from a charge of at least one aliphatic hydrocarbon having 2 to 12 atoms of carbon.

## Patentansprüche

1. Verfahren zur Erzeugung aromatischer Kohlenwasserstoffe in einer eine Vielzahl von Reaktionsrohren umfassenden Reaktionszone, wobei dieses Verfahren umfaßt eine Stufe a) zur Kontaktierung, innerhalb der Rohre, einer Charge aus wenigstens einem aliphatischen Kohlenwasserstoff mit zwei bis zwölf Kohlenstoffatomen und einer zeolithischen Katalysatorzusammensetzung, die ggfs. wenigstens ein Metall enthält unter Reaktionsbedingungen, derart, daß man ein Gemisch gewinnt, das aromatische Kohlenwasserstoffe umfaßt, und daß man einen zeolithischen verbrauchten Katalysator mit einem Minimum an während der Reaktion abgeschiedenem Koks erhält, wobei die Rohre dieser Reaktionszone durch indirekte Erwärmung in einer Kammer erwärmt werden, die ein Wirbelbett aus Partikeln enthält, die durch Fluidisierungsgas in Bewegung versetzt wurden, dadurch gekennzeichnet, daß dieses Wirbelbett im wesentlichen durch Zusatz von Wärme erwärmt wird, die aus der Injektion heißer Gase stammt, die in einer Zone außerhalb dieser Kammer erzeugt wurden, und daß diese heißen außerhalb erzeugten Gase in dieses Wirbelbett getrennt vom Fluidisierungsgas unter Bedingungen derart eingeführt werden, daß die Reaktionstemperatur im Inneren der Rohre bei 400 bis 600 °C liegt.

2. Verfahren nach Anspruch 1, bei dem die Temperatur der Reaktion 480 bis 550 °C für einen LPG Schnitt beträgt.

3. Verfahren nach Anspruch 1, bei dem die Temperatur der Reaktion bei 450 bis 530 °C für einen Naphtaschnitt liegt.

4. Verfahren nach einem der Ansprüche 1 bis 3, bei dem das Bett aus Partikeln wenigstens zum Teil durch wenigstens eine Injektion in dieses Bett von warmen Gasen erwärmt wird, die aus wenigstens einem Heißgasgenerator stammen, beispielsweise aus einer mit wenigstens einem Brenner ausgestatteten Feuerung.

5. Verfahren nach einem der Ansprüche 1 bis 4, bei dem man eine Regenerationsstufe b) des Katalysators in der gleichen Reaktionszone wie der der Stufe a) unter Regenerationsbedingungen realisiert, wobei das Bett aus Partikeln wenigstens zum Teil durch die Wärme erwärmt wird, die durch die Regenerierung des Katalysators erzeugt wurde.

6. Verfahren nach einem der Ansprüche 1 bis 5, bei dem das Wirbelbett Wärme mit diesen Reaktionsrohren unter Bedingungen derart austauscht, daß die Temperaturabweichung zwischen dem Wirbelbett und dem Katalysator 5 bis 100 °C und bevorzugt 20 bis 40 °C beträgt.

7. Verfahren nach einem der Ansprüche 1 bis 6, bei dem, nachdem man das Kohlenwasserstoffgemisch gewonnen hat, man diese Reihenfolge ausführt:
Man unterbricht Stufe a) der Kontaktierung der Charge mit dem Katalysator, man reinigt die Reaktionszonen, man realisiert eine Regenerierungsstufe b) des Katalysators in der gleichen Reaktionszone wie der der Stufe a), man zieht einen Regenerierungsabstrom ab, man reinigt die Reaktionszone und man wiederholt Stufe a) und die Stufen der oben genannten Aufeinanderfolge.

8. Verfahren nach einem der Ansprüche 1 bis 7, bei dem die Reaktionszone eine Vielzahl von parallel angeordneten Rohren umfaßt, wobei wenigstens ein Teil so ausgelegt ist, daß die Stufe a) realisiert, während der andere Teil so ausgelegt ist, daß die Stufe b) realisiert und umgekehrt.

9. Verfahren nach einem der Ansprüche 1 bis 8, bei dem der Katalysator in Form eines Festbettes vorliegt.

10. Verfahren nach einem der Ansprüche 1 bis 9, bei dem man die Zufuhr äußerer Wärme über eine Transportleitung einführt, die an einer Stelle angeschlossen ist, die zwischen dem oberen Viertel und der halben Höhe der Kammer sich befindet.

11. Verfahren nach einem der Ansprüche 1 bis 10, bei dem das Wirbelbett eine Zone in direktem Kontakt mit der Reaktionszone und eine zu dieser Reaktionszone umfangsmäßig angeordnete Zone umfaßt und bei dem man die Zone des Bettes am Umfang der Reaktionszone bei einer Geschwindigkeit fluidisiert, die höher als die der Zone des Bettes ist, die in direktem Kontakt mit der Reaktionszone steht.

12. Vorrichtung zur Umwandlung von Kohlenwasserstoffen, eine Kammer (1) mit einer Oberfläche, einer Unterseite und einem seitlichen Hüllmantel (2) umfassend und einen dichten Reaktor (4) enthaltend; der mit einem geeigneten Katalysator gefüllt ist, wobei der Reaktor wenigstens zum Teil in ein Wirbelbett aus heißen, vorzugsweise inerten Partikeln taucht, wobei das Bett Wärme mit diesem Reaktor austauscht, Mittel zum Fluidisieren (14) des Bettes, die mit der Unterseite dieser Kammer verbunden sind, wobei der Reaktor im übrigen eine Vielzahl von Reaktionsrohren (3) umfaßt, die im wesentlichen parallel zueinander sind und parallel gespeist sind, Mittel zum Speisen (9) mit einer Charge, die an einem Ende dieser Rohre angeschlossen sind, sowie Mittel (8) zum Gewinnen eines Abstroms, die mit dem anderen dieser Rohre (3) verbunden sind, wobei das Wirbelbett im wesentlichen über wenigstens ein Mittel zum Speisen mit heißem Gas (18, 23) beispielsweise einem Heißgasgenerator außerhalb der Kammer erwärmt ist.

13. Vorrichtung nach Anspruch 12, bei der das Mittel zum Speisen mit heißem Gas mit dem seitlichen Hüllmantel verbunden oder auf diesem Mantel montiert ist.

14. Vorrichtung nach Anspruch 12 oder 13, bei der die Länge der Rohre 2 bis 20 mm beträgt, wobei ihr Innendurchmesser zwischen 10 und 200 mm liegt, die Rohre in wenigstens einem Bündel gruppiert sind, wobei der Zwischenachsabstand jedes Rohres zwischen dem 1,5- und 6-fachen seines Außendurchmessers beträgt.

15. Vorrichtung nach einem der Ansprüche 12 bis 14, bei der das Mittel (18, 23) zum Speisen mit heißem Gas eine Transportleitung (19) umfaßt, die so ausgelegt ist, daß sie den Strom heißen Gases im Gegenstrom zum Fluidisierungsgasstrom leitet.

16. Vorrichtung nach einem der Ansprüche 12 bis 15, bei der die Kammer zylindrisch ist und die Vielzahl der Rohre einen Hüllmantel von global zylindrischer Form oder global polygonaler Form bildet.

17. Vorrichtung nach einem der Ansprüche 12 bis 16, bei der das Mittel zum Speisen mit heißem Gas an einer stelle mündet, die unter einer Entfernung von der Oberseite der Kammer sich befindet, die zwischen dem Viertel und der Hälfte der Höhe des seitlichen Hüllmantels liegt.

18. Vorrichtung nach einem der Ansprüche 12 bis 17 bei der das Volumen dieses Wirbelbettes, das zwischen dem seitlichen Hüllmantel der Kammer und dem durch die Vielzahl der Rohre bestimmten Hüllmantels sich befindet, durch komplementäre Fluidisierungsmittel (14a) fluidisiert wird, die mit der Unterseite der Kammer (1) verbunden und so ausgelegt sind, daß sie eine Geschwindigkeit der Fluidisierungsgase liefern, die größer ist als die, die durch die Fluidisierungsmittel (14) des Bettes in Höhe der Rohre geliefert wird.

19. Vorrichtung nach einem der Ansprüche 12 bis 18, dadurch gekennzeichnet, daß sie Mittel (12, 61) zur Regenerierung des verbrauchten Katalysators umfaßt, die so ausgelegt sind, daß sie den Katalysator in diesen Rohren regenerieren und die mit den Reaktionsrohren verbunden sind, sowie Mittel (50), die so ausgelegt sind, daß sie die Reaktionsrohre abwechselnd mit den Mitteln (9) zum Speisen mit Charge und den Mitteln (8) zur Gewinnung des Abstroms, dann mit diesen Regenerierungsmitteln (12, 61) verbinden.

20. Vorrichtung nach einem der Ansprüche 12 bis 19, eine Vielzahl von Reaktionsrohren (40, 41, 42), sowie eine Vielzahl von Regenerierungsrohren (45, 46) umfassend, die in das Wirbelbett tauchen und so ausgelegt sind, daß sie den Katalysator regenerieren, wobei diese Regenerierungsrohre an einem Ende mit einer Speisung mit Regenerierungsgas (12) und am anderen Ende mit einem Abzug (61) eines Regenerierungsabstroms verbunden sind und im übrigen Mittel (50) umfassen, die so ausgelegt sind, daß sie die Reaktionsrohre abwechselnd mit den Mitteln (9) zur Speisung mit Charge und den Mitteln (8) zur Gewinnung des Abstroms, dann mit der Speisung mit Regenerierungsgas (12) und mit dem Abzug des Regenerierungsabstroms (61) verbinden, wobei diese Mittel (50) so ausgelegt sind, daß sie im übrigen die Regenerierungsrohre abwechselnd mit der Speisung mit Regenerierungsgas (12) und mit dem Abzug des Regenerierungsabstroms (61), dann mit den Mitteln zum Speisen mit Charge (9) und mit den Gewinnungsmitteln (8) für den Abstrom aus aromatischen Kohlenwasserstoffen verbinden, wobei die Reaktionsrohre in der sog. Reaktionsphase arbeiten, während die Regenerierungsrohre in der sog. Regenerierungsphase in einem ersten Takt arbeiten und die Reaktionsrohre dann zu Regenerierungsrohren werden, während die Regenerierungsrohre zu Reaktionsrohren in einem zweiten Takt werden.

21. Verwendung der Vorrichtung nach einem der Ansprüche 12 bis 20 in einem Verfahren zur Herstellung aromatischer Kohlenwasserstoffe aus einer Charge wenigstens eines aliphatischen Kohlenwasserstoffes mit 2 bis 12 Kohlenstoffatomen.
